Europäisches Patentamt

European Patent Office

Office européen des brevets

(11) Veröffentlichungsnummer: **0 349 666 B1**

(12) **EUROPÄISCHE PATENTSCHRIFT**

(45) Veröffentlichungstag der Patentschrift: **23.12.92**

(21) Anmeldenummer: **88110870.8**

(22) Anmeldetag: **07.07.88**

(51) Int. Cl.5: **A23C 9/12**, A23C 9/20, A23C 9/13

(54) Verfahren zur enzymatischen Herstellung von bifidogener Säuglings- und Diätnahrung.

(43) Veröffentlichungstag der Anmeldung:
**10.01.90 Patentblatt  90/02**

(45) Bekanntmachung des Hinweises auf die
Patenterteilung:
**23.12.92 Patentblatt  92/52**

(84) Benannte Vertragsstaaten:
**AT BE CH DE ES FR GB GR IT LI LU NL SE**

(56) Entgegenhaltungen:
**CH-A- 649 002**
**US-A- 2 717 211**

**CHEMICAL ABSTRACTS band 89. no. 1, 3rd**
**July 1978, abstract no. 3745v; J. DICKSON et**
**al.: "Intestinal neuraminidase activity of**
**suckling rats and other mammals. Relations-**
**hip to the sialic acid content of milk"; BIO-**
**CHEM. J., 1978, 170 (2), 407-13**

**FOOD SCIENCE TECH. band 42, no. 1, pages**
**146-150, abstract 77039852, J. OF FOOD**
**SCIENCE; C. KEHAGIAS et al.: "Growth re-**
**sponse of bifidobacterium bifidum to a hy-**
**drolytic product isolated from bovine ca-**
**sein"**

(73) Patentinhaber: **MILUPA AKTIENGESELL-**
**SCHAFT**
**Bahnstrasse 14-30**
**W-6382 Friedrichsdorf/Taunus(DE)**

(72) Erfinder: **Schweikhardt, Friedrich, Dr.**
**Milupa Aktiengesellschaft Bahnstrasse 14-30**
**W-6382 Friedrichsdorf(DE)**
Erfinder: **Sawatzki, Günther, Dr.**
**Milupa Aktiengesellschaft Bahnstrasse 14-30**
**W-6382 Friedrichsdorf(DE)**
Erfinder: **Braun, Rainer**
**Milupa Aktiengesellschaft Bahnstrasse 14-30**
**W-6382 Friedrichsdorf(DE)**

(74) Vertreter: **Brauns, Hans-Adolf, Dr. rer. nat. et**
**al**
**Hoffmann, Eitle & Partner, Patentanwälte**
**Arabellastrasse 4**
**W-8000 München 81(DE)**

FOOD SCIENCE TECH. band 37, no. 2. 1976. p. 679, abstract 77029116, DISSERTATION ABSTRACTS INTERNATIONAL; C. KEHAGIAS et al.: "Commercial casein as a source of edible sialic acid and a growth promoting factor for lactobacillus bifidus"

CHEMICAL ABSTRACTS band 95, no. 7, 17th August 1981, abstract no. 56922f; H. VON NICOLAI et al.: "Partial purification and properties of neuraminidase from bifidobacterium lactentis"

CHEMICAL ABSTRACTS band 102, no. 6, 11th February 1985, abstract 58276k; H. FRIEBO-LIN et al.: "Proton NMR spectroscopy. Specificity of microbial sialidase on complex substrates"

JOURNAL OF FOOD SCIENCE band 45, no. 5, September-October 1980, Chicago, Illinois, USA; C.N. KUCHROOD et al.: "Technological approaches for infant food manufacture form modified buffalo milk"

EP 0 349 666 B1

**Beschreibung**

Die Erfindung betrifft ein Verfahren zur Herstellung von bifidogenen und in der Antigenität herabgesetzten Säuglings- und Diätnahrungen.

Muttermilch gilt weltweit als die optimale Ernährung für Säuglinge. Aus mancherlei Gründen steht jedoch für die Ernährung von Neugeborenen und von Säuglingen Muttermilch nicht immer zur Verfügung. Deshalb wird schon seit langer Zeit die Milch von Säugetieren, insbesondere Kuhmilch, in der Säuglingsernährung verwendet. Unveränderte oder leicht fettreduzierte Kuhmilch, also eine Magermilch, wird vom Säugling jedoch erst nach dem 4. bis 6. Monat vertragen. Die Verwendung von Kuhmilch als Muttermilchersatz macht jedoch eine sogenannte Adaptation erforderlich. Hierzu gehört u.a. ein teilweiser Ersatz des Milchfetts durch pflanzliche Öle, und zur Verbesserung der Proteinwertigkeit und um den höheren Gehalt der Frauenmilch an gewissen essentiellen Aminosäuren zu erhalten, ist auch eine Veränderung des Gehaltes an Kuhmilchprotein erforderlich. Grundsätzlich ist man bestrebt, bei der Herstellung von Säuglingsnahrung auf Kuhmilchbasis diese der Muttermilch so eng wie möglich anzupassen.

In zahlreichen Literaturstellen wird die Herstellung von Säuglingsnahrung auf Basis von Kuhmilch beschrieben. Der Stand der Technik sieht dabei jeweils vor, Kuhmilch durch Fortnahme von bestimmten Bestandteilen und Zugabe von Muttermilch-ähnlichen Bestandteilen zu substituieren, um damit ein Produkt zu erhalten, das der Muttermilch weitgehend entspricht.

Neben dem Anwendungsbereich in der Säuglingsnahrung ist die Herstellung von Diätnahrungen mit verbesserter Eiweißverdaulichkeit und herabgesetzter Antigenität für die Krankenernährung von besonderer Bedeutung. Dies bezieht sich besonders auf Patienten mit intestinalen Allergien, anderen allergischen Erkrankungen (z.B. Ekzem, Urtikaria u.a.), auf Patienten mit Nieren- und Leberinsuffizienz und Patienten mit gastrointestinalen Störungen.

Sämtliche im Handel befindlichen Säuglings- und Diätnahrungen auf Eiweißbasis sind durch die meist vollständig erhaltene spezifische Antigenität ihrer Proteinkomponente charakterisiert. Der enzymatische oder säurehydrolysierte Abbau von Nahrungseiweißen führt zwar zum weitgehenden Verlust der Antigenität, die auf dieser Basis hergestellen Oligopeptid- oder Elementardiäten zeichnen sich jedoch durch eine drastische Verschlechterung der Geschmackseigenschaften aus, die fast generell zur Ablehnung solcher Nahrungen durch die Patienten führt. Die Antigenität der Nahrungsproteine stellt somit ein bisher ungelöstes Problem bei der Adaptation von Säuglingsnahrungen auf Kuhmilch- oder Sojabasis an die Muttermilch und bei der Herstellung gut verträglicher Diätnahrungen in der Krankenernährung dar.

Alle bekannten Säuglingsnahrungen auf Basis von Kuhmilch weisen den Nachteil auf, daß dieser Muttermilchersatz nicht bifidogen ist. Bifidus-Faktoren sind u.a. Oligosaccharide, die unter anderem N-Acetyl-D-Glukosamin, N-Acetylgalactosamin, L-Fukose, Laktose, D-Glukose und D-Galaktose enthalten. Diese sind Wuchsstoffe für den in der Darmflora brustgefütterter Säuglinge hauptsächlich vorkommenden Laktobazillus bifidus. Die nicht vorhandene Bifidogenität aller bekannten Muttermilchersatzstoffe auf Basis von Säugetiermilch, insbesondere Kuhmilch, hat man bisher in Kauf genommen, weil keine Möglichkeit bekannt war, diesen Bifidus-Faktor den Frauenmilch-Ersatzpräparaten zuzufügen oder in diesen auszubilden. Der vorliegenden Erfindung liegt deshalb die Überlegung zugrunde, durch Abspaltung der Sialinsäure die bifidogenen Oligosaccharide am Residualprotein den Bifidusbakterien als Wuchsstoffe zugänglich zu machen.

Aus Food Science Technol., Band 42, Nr. 1, Seiten 146 - 150 & Abstract 770398 52, J.of Food Science und Food Science Technol., Band 37, Nr. 2, 1976, Seite 679 & Abstract 7709116, Dissertation Abstracts International ist es bekannt, Sialinsäure aus Kasein abzuspalten, wobei ein "Casein-Bifidus-Faktor" (CBF) erhalten wurde. Die Abspaltung erfolgt dort durch Behandeln des Caseins mit Schwefelsäure. Für die Behandlung von Milch zur Herstellung von Säuglings- oder Diätnahrung ist eine solche Verfahrensweise nur begrenzt brauchbar, weil durch die eingesetzte Schwefelsäure oder eine andere Mineralsäure auch wichtige Aminosäuren, die Glutamin und Asparagin aufgespalten werden, und eine Denaturierung erfolgt.

Aufgabe der Erfindung ist es, ein Verfahren zur Herstellung einer bifidogenen Säuglings- und Diätnahrung zu zeigen.

Die Erfindung betrifft ein Verfahren zur Herstellung einer bifidogenen Säuglings- und Diätnahrung, bei der man Milch, Milchbestandteile oder Milchprodukte von Säugetieren gegebenenfalls in an sich bekannter Weise adaptiert (der Muttermilch anpaßt), und ist dadurch gekennzeichnet, daß man zur Erzielung der Bifidogenität Sialinsäure mit dem Enzym Neuraminidase (Sialidase) von den Milchproteinen abspaltet.

Die vorliegende Erfindung betrifft nicht die an sich bekannte übliche Adaptation von Milch, Milchbestandteilen oder Milchprodukten von Saugetieren an Frauenmilch. Diese wird als bekannt vorausgesetzt. Vielmehr ist das Wesen der Erfindung darin zu sehen, daß man Sialinsäure von den Milchproteinen und

3

deren Abbauprodukten enzymatisch abspaltet. Sialinsäure ist auch als N-Acetylneuraminsäure bekannt. Diese wird gemäß der vorliegenden Erfindung von ihrer Bindung am Residual-Protein abgespalten.

Unter Milch von Säugetieren wird im nachfolgenden insbesondere Kuhmilch verstanden. Milch von anderen Säugetieren, z.B. von Ziegen, Schafen oder vom Pferd, kommt gegebenenfalls auch in Frage.

"Milch" ist im Sinne der vorliegenden Erfindung Vollmilch und Magermilch; Milchbestandteile umfassen die aus der Milch gewonnenen oder gewinnbaren Nahrungsproteine, insbesondere Caseine, Caseinate, Molkenproteine (auch entmineralisiert), Milcheiweißfraktionen, Proteine aus Magermilch und/oder Vollmilch sowie Milchprodukte, z.B. Quark.

In-vitro- und in-vivo-Untersuchungen haben überraschenderweise gezeigt, daß die spezifische Antigenität von Kuhmilch-Proteinen durch Pepsinverdauung innerhalb von 30 bis 60 Minuten weitgehend zerstört wird. Dieser Vorgang ist pH-abhängig und erfolgt optimal bei einem pH-Wert 2, verzögert beim pH-Wert 3, und oberhalb eines pH-Wertes 4 praktisch nicht mehr. Die Trypsinverdauung bei einem pH-Wert von 8 führt nicht zu einem Verlust einer spezifischen Antigenität. Durch den normalen Prozeß der Magenverdauung wird demnach verhindert, daß Antigen-wirksame Milchproteine in den Darm gelangen, an der Mukosa haften und durch die Mukosabarriere permeieren können. Erhöhte Magen-pH-Werte, wie sie bei jungen Säuglingen physiologischerweise vorkommen und bei einer allergischen Diathese häufig nachweisbar sind, führen demnach bei Ernährung mit Fremdproteinen zur erhöhten Antigenbelastung des Organismus und können in besonderen Fällen allergische Erkrankungen, wie z.B. die Kuhmilch-Protein-Intoleranz, auslösen.

In der europäischen Patentanmeldung No. 88 110 284.2 mit dem Titel "Verfahren zur Herstellung bifidogener Säuglings- und Diätnahrungen mit verminderter Antigenität" wird ein Verfahren beschrieben, bei dem man Milch, Milchbestandteile oder Milchprodukte von Säugetieren in an sich bekannter Weise adaptiert und zur Erzielung der Bifidogenität Sialinsäure von den Milchproteinen und deren Abbauprodukten abspaltet. Die Abspaltung erfolgt bei dem dort beschriebenen Verfahren mit Salzsäure oder einem Salzsäure/Phosphorsäure-Gemischin einem pH-Bereich von 1 bis 3.

Eine sehr viel schonendere und deshalb technisch vorteilhafte Verfahrensweise zum Abspalten der Sialinsäure von den Milchproteinen ist die erfindungsgemäß angewendete enzymatische Methode. Erfindungsgemäß wird die Abspaltung der Sialinsäure von den Milchproteinen enzymatisch durch Zugabe einer Neuraminidase (Sialidase) durchgeführt. Neuraminidasen spalten die Neuraminsäure-Glykoside und Neuraminsäure-haltigen Glykoproteine an der $\alpha$-O-glykosidischen Bindung zwischen Kohlenhydrat und der N-Acetylneuraminsäure.

Die enzymatische Spaltung erfolgt in einem pH-Wert-Bereich von 4,0 bis 8,0 und im allgemeinen in einem Temperaturbereich von 4 bis 40°C, vorzugsweise 15 bis 30°C. Der optimale pH-Bereich liegt bei einem pH-Wert von 5,2 bis 6,5, der gegebenenfalls mit Hilfe von Salzsäure, Phosphorsäure, Zitronensäure und anderen geeigneten organischen Säuren eingestellt wird. Die für die enzymatische Spaltung erforderliche Zeit ist wie üblich temperaturabhängig und hängt auch von der Aktivität des jeweils verwendeten Enzyms ab. Sie beträgt etwa 10 Minuten bis 24 Stunden.

Die Neuraminidase (Sialidase) kann in üblicher Weise immobilisiert sein. Immobilisierungsverfahren zum Immobilisieren von Enzymen sind aus dem Stand der Technik bekannt. Es können die üblichen Immobilisierungsverfahren angewendet werden. Der Vorteil bei der Verwendung des immobilisierten Enzyms ist darin zu sehen, daß das Enzym nach der erfolgten enzymatischen Reaktion leicht durch übliche Verfahren, wie Zentrifugieren oder Filtrieren, abgetrennt und gegebenenfalls wieder verwertet werden kann. Bei der Verwendung des nicht-immobilisierten Enzyms kann das freie Enzym im Produkt verbleiben. Dies ist insbesondere bei einem Batch-Verfahren der Fall. Das Enzym kann durch eine kurzzeitige Hitzebehandlung inaktiviert werden.

Der Vorteil der enzymatischen Spaltung ist die schonende Behandlung des Proteins und die bessere molkereitechnische Weiterverarbeitung.

Nach der Hydrolyse erfolgt eine Neutralisierung mit Phosphaten, Citraten und anderen geeigneten Anionen, beispielsweise Natrium- oder Calciumphosphat und/oder -citrat, weil hier keine so starke Pufferung erforderlich ist. Durch den Zusatz der entsprechenden Kationen wird der Mineralstoffgehalt der Fertignahrung optimiert.

Nach der Sialinsäureabspaltung kann zweckmäßigerweise ein kurzzeitiges Erhitzen des Produktes auf 80 bis 100°C erfolgen, um die spezifische Antigenität des Milchproteins weiter herabzusetzen. Diese Erhitzungsstufe kann aber eine bei der Zubereitung von Säuglings- und Diätnahrungen auf Basis von Milch, Milchbestandteilen oder Milchprodukten (Adaptation) ohnehin übliche Verfahrensstufe, z.B. Sterilisierung oder Pasteurisierung, sein.

Nachfolgend wird eine geeignete Verfahrensweise für die enzymatische Abspaltung der Sialinsäure von den Milchproteinen angegeben. Das erfindungsgemäße Verfahren kann somit beispielsweise unter Anwendung der folgenden Stufen durchgeführt werden:

a) UHT-Erhitzung der Milch oder Milchprotein/Milchmischung,

b) Pufferung der Mischung durch Zusatz von Salzsäure, Phos- phorsäure, Zitronensäure oder einer anderen geeigneten organischen Säure auf pH 4,5 bis 7,0,

c) Zugabe von Neuraminidase (Sialidase) zu der Milch oder dem Milchprodukt,

d) Halten der Mischung gemäß c) während einer ausreichenden Zeit bei einem pH-Bereich von 4,0 bis 8,0 während 10 Minuten bis 24 Stunden unter Abspaltung der Sialinsäure von den Proteinen bei einer Temperatur von 4 bis 60°C,

e) gegebenenfalls Erhitzen auf 85 bis 100°C während 5 bis 15 Sekunden zur Inaktivierung der Neuraminidase nach Beendigung der Hydrolyse, gemäß d),

f) Neutralisieren bzw. Puffern mit KOH, $K_2CO_3$ oder mit Phosphaten und/oder Citraten von Kalium, Natrium und Calcium,

g) Zugabe von üblichen, für die Adaptation verwendeten Zusätzen, übliche molkereitechnische Bearbeitung der Mischung, und

h) Sprühtrocknen des gemäß g) erhaltenen Gemisches.

Bei der technischen Durchführung des Verfahrens ist es zweckmäßig und üblich, vor bzw. nach den einzelnen Verfahrensstufen eine Homogenisierung der Mischung in geeigneten Homogenisierungsmaschinen durchzuführen. Dies richtet sich nach den jeweiligen technischen Gegebenheiten. Grundsätzlich läßt sich das erfindungsgemäße Verfahren in die zur Herstellung von Säuglings- und Diätnahrungen auf Basis von Milch oder Milchprodukten bereits angewendeten betrieblichen Einrichtungen ohne große zusätzliche Investitionen integrieren.

Das erfindungsgemäße Verfahren ermöglicht die Herstellung von bifidogenen Säuglings- und Diätnahrungen. Zur Erzeugung bzw. Verstärkung einer bifidogenen Wirkung ist es sehr zweckmäßig, Lactose und/oder geeignete Kohlenhydrate (z.B. Maltose) zuzusetzen. Neben der Erzeugung der bifidogenen Eigenschaft wird auch die antigene Wirkung herabgesetzt. Das Residualprotein wirkt als Lektininhibitor und fungiert deshalb als Bifidus-Wuchsstoff, weil die bifidogenen Oligosaccharide für Lactobacillus bifidus zugänglich gemacht werden.

Die gemäß Verfahren hergestellten Säuglingsnahrungen erzeugen eine Bifidusflora wie bei frauenmilchernährten Kindern. Durch die Entwicklung der Bifidusflora im Darm der Kinder wird in den ersten Lebensmonaten ein Infektionsschutz erreicht, wie bei gestillten Säuglingen. Die nach dem erfindungsgemäßen Verfahren hergestellten Säuglings-und Diätnahrungen haben eine bessere Verdaulichkeit und Verträglichkeit.

Die nachfolgenden Beispiele beschreiben die Erfindung.

Beispiel 1

In 1.000 Liter Wasser werden 75 kg entmineralisiertes Molkenpulver (78% Eiweiß i.T.) und 42 kg Säurecasein gelöst. Die Mischung wird 4 Sekunden bei 140°C in einem UHT (ultra-high-temperature)-Erhitzer sterilisiert. Anschließend wird auf 37 bis 40°C gekühlt und mit Salzsäure und/oder Zitronensäure auf einen pH-Wert von 5,2 bis 6,5 gepuffert. Zu dem Gemisch gibt man 25.000 bis 100.000 U Neuraminidase. Das Gemisch wird 5 Stunden bei einem pH-Wert zwischen 4,8 und 6,0 bei einer Temperatur von 30°C gehalten. Die Inkubationszeit beträgt 3 bis 4 Stunden.

Bei Verwendung einer immobilisierten Neuraminidase (100.000 bis 1 Mio U Neuraminidase) wird diese durch Zentrifugieren und/oder Filtrieren abgetrennt und kann dann gegebenenfalls in einem weiteren Ansatz wiederverwendet werden. Bei Verwendung einer nicht-immobilisierten Neuraminidase wird der Ansatz nach der Hydrolyse 5 bis 10 Sekunden zur Inaktivierung des Enzyms auf 95 bis 100°C erhitzt.

Anschließend kühlt man auf 70°C. Dann werden 560 kg Laktose, 200 kg einer Pflanzenfettmischung, 3,0 kg Emulgatoren und 83,0 kg Milchfett sowie 3,8 kg Kaliumchlorid zugegeben. Anschließend erfolgt eine Homogenisierung bei 200 bar und 65°C. Nach einer Lagerung in einem Zwischentank erfolgt die Zugabe von Mineralstoffen und Spurenelementen und im Anschluß daran eine zweite Homogenisierung bei 100 bar. Das homogenisierte Gemisch wird bei 85°C pasteurisiert, einem Sprühturm zugeführt und das erhaltene Pulver mit einem Vitamingemisch vitaminisiert. Anschließend daran erfolgt die Instantisierung und Verpakkung.

Ein so hergestelltes Produkt ist hervorragend zur Ernährung von Frühgeborenen sowie von Säuglingen, die gegenüber Kuhmilch oder anderen Frauenmilchersatzpräparaten empfindlich sind, geeignet.

Beispiel 2

Herstellung einer Diät-Nahrung für Kranke mit gastrointestinalen Störungen.

| Zusammensetzung: | |
|---|---|
| Säurecasein | 33,80 kg |
| entmineralisiertes Molkenprotein (75% Eiweiß i.T.) | 55,90 kg |
| Butterfett | 107,10 kg |
| Maiskeimöl | 164,30 kg |
| Emulgatoren | 6,00 kg |
| Stärke | 71,50 kg |
| Laktose | 512,52 kg |
| Vitaminmix | 3,00 kg |
| Mineralstoffmix | 33,25 kg |
| Zitronensäure | 0,50 kg |
| Calciumcarbonat | 4,65 kg |
| Kaliumhydroxid | 3,38 kg |
| Natriumhydroxid | 2,87 kg |
| Natriumhydrogenphosphat | 0,73 kg |
| Magnesiumhydroxidcarbonat | 0,50 kg |
| | 1.000,00 kg |

Zur enzymatischen Hydrolyse:

25.000 bis 100.000 U Neuraminidase/1.000 kg Pulver

In 1.000 Liter Wasser werden nacheinander 55,9 kg entmineralisiertes Molkenproteinkonzentrat (75% Eiweiß i.T.) und 33,8 kg Säurecasein gelöst. Die Mischung wird 4 Sekunden bei 140°C in einem UHT (ultra high temperature)-Erhitzer sterilisiert. Anschließend wird auf 37 bis 40°C gekühlt und mit Salzsäure und/oder Zitronensäure auf einen pH-Wert von 4,5 bis 6,5 gepuffert. Zu dem Gemisch gibt man 25.000 bis 100.000 U Neuraminidase. Das Gemisch wird 5 Stunden bei einem pH-Wert zwischen 4,8 bis 6,0 bei einer Temperatur um 37 bis 40°C gehalten. Die Inkubationszeit beträgt 3 bis 4 Stunden. Bei Verwendung einer immobilisierten Neuraminidase ($10^5$ bis $10^6$ U Neuraminidase) wird diese durch Zentrifugierung und/oder Filtrieren abgetrennt und kann gegebenenfalls in einem weiteren Ansatz wieder verwendet werden. Bei Verwendung einer nicht immobilisierten Neuraminidase wird der Ansatz nach der Hydrolyse 5 bis 10 Sekunden zur Inaktivierung des Enzyms auf 95 bis 100°C erhitzt.

Anschließend kühlt man auf 70°C und gibt die der Rezeptur entsprechenden Mengen Fette, Emulgatoren, Kohlenhydrate und Mineralstoffe zu. Anschließend erfolgt eine Homogenisierung bei 200 bar und 65°C. Danach erfolgt der Zusatz von Vitaminen. Nach 10 Minuten Rühren wird der Ansatz bei 85 bis 90°C pasteurisiert und anschließend in üblicher Weise sprühgetrocknet. Das erhaltene Pulver wird abgepackt oder nachinstantisiert. Das Produkt eignet sich als Diätnahrung zur Ernährung von Patienten mit Störungen des Gastrointestinal-Traktes.

| Analyse | | |
|---|---|---|
| 100 ml enthalten | | |
| Eiweiß | | 1,0 g/100 ml |
| Kohlenhydrate | | 8,5 g |
| davon Laktose | 7,5 g | |
| Stärke | 1,0 g | |
| Fett | | 3,8 g |
| davon Butterfett | 1,5 g | |
| Pflanzenfett | 2,3 g | |
| Asche | | 0,2 g |
| davon Na | 28 mg/100ml | |
| K | 48 mg | |
| Ca | 34 mg | |
| Mg | 3 mg | |
| P | 14 mg | |

**Patentansprüche**

1. Verfahren zur Herstellung einer bifidogenen Säuglingsund Diätnahrung, bei der man Milch, Milchbestandteile oder Milchprodukte von Säugetieren gegebenenfalls in an sich bekannter Weise adaptiert (der Muttermilch anpaßt), dadurch **gekennzeichnet,** daß man zur Erzielung der Bifidogenität Sialinsäure mit dem Enzym Neuraminidase (Sialidase) von den Milchproteinen abspaltet.

2. Verfahren gemäß Anspruch 1, dadurch **gekennzeichnet,** daß man eine immobilisierte Neuraminidase (Sialidase) verwendet.

3. Verfahren gemäß Ansprüchen 1 bis 2, dadurch **gekennzeichnet,** daß man für die bifidogene Wirkung Laktose und/oder andere Kohlenhydrate, wie Maltose, zugibt.

4. Verfahren gemäß Ansprüchen 1 bis 3, durch folgende Stufen gekennzeichnet:
   a) UHT-Erhitzung der Milch oder Milchprotein/Milchmischung,
   b) Pufferung der Mischung durch Zusatz von Salzsäure, Phosphorsäure, Zitronensäure oder einer anderen geeigneten organischen Säure auf pH 4,5 bis 7,0,
   c) Zugabe von Neuraminidase (Sialidase) zu der Milch oder dem Milchprodukt,
   d) Halten der Mischung gemäß c) während einer ausreichenden Zeit bei einem pH-Bereich von 4,0 bis 8,0 während 10 Minuten bis 24 Stunden unter Abspaltung der Sialinsäure von den Proteinen bei einer Temperatur von 4 bis 60°C,
   e) gegebenenfalls Erhitzen auf 85 bis 100°C während 5 bis 15 Sekunden zur Inaktivierung der Neuraminidase nach Beendigung der Hydrolyse, gemäß d),
   f) Neutralisieren bzw. Puffern mit KOH, $K_2CO_3$ oder mit Phosphaten und/oder Citraten von Kalium, Natrium und Calcium,
   g) Zugabe von üblichen, für die Adaptation verwendeten Zusätzen, übliche molkereitechnische Bearbeitung der Mischung, und
   h) Sprühtrocknen des gemäß g) erhaltenen Gemisches.

**Claims**

1. Process for producing a bifidogenic infant and diet food, in which milk, milk constituents or milk products of mammals are optionally adapted in a manner known per se (matches mother's milk), characterised in that sialic acid is split from the milk proteins using the enzyme neuraminidase (sialidase) to achieve bifidogenicity.

2. Process according to claim 1, characterised in that an immobilised neuraminidase (sialidase) is used.

3. Process according to claims 1 to 2, characterised in that lactose and/or other carbohydrates, such as

7

maltose, are added for the bifidogenic effect.

4. Process according to claims 1 to 3, characterised by the following steps:

a) UHT heating of the milk or milk protein/milk mixture,

b) buffering the mixture to pH 4.5 to 7.0 by adding hydrochloric acid, phosphoric acid, citric acid or a further suitable organic acid,

c) adding neuraminidase (sialidase) to the milk or the milk product,

d) maintaining the mixture according to c) for a sufficient time period at a pH range of 4.0 to 8.0 for 10 minutes to 24 hours while splitting sialic acid from the proteins at a temperature of 4 to 60°C,

e) optionally heating at 85 to 100°C for 5 to 15 seconds to inactivate the neuraminidase after completing hydrolysis according to d),

f) neutralising or buffering with KOH, $K_2CO_3$ or with phosphates and/or citrates of potassium, sodium and calcium,

g) adding conventional additives used for adaptation, conventional dairy processing of the mixture, and

h) spray-drying the mixture obtained according to g).

**Revendications**

1. Procédé de préparation d'un aliment pour bébés et d'un aliment diététique bifidogène dans lequel on adapte le cas échéant de façon connue en soi du lait, des composants du lait ou des produits lactés de mammifères (au lait maternel), caractérisé en ce qu'on sépare l'acide sialique des protéines du lait à l'aide de l'enzyme neuraminidase (sialidase) pour obtenir la bifidogénicité.

2. Procédé selon la revendication 1, caractérisé en ce qu'on utilise une neuraminidase (sialidase) immobilisée.

3. Procédé selon les revendications 1 et 2, caractérisé en ce qu'on ajoute du lactose et/ou d'autres glucides, tels que le maltose, en vue de l'effet bifidogène.

4. Procédé selon les revendications 1 à 3, caractérisé par les étapes suivantes :

a) chauffage UHT du lait ou du mélange protéines du lait/lait,

b) tamponnement du mélange à un pH de 4,5 à 7,0, par addition d'acide chlorhydrique, d'acide phosphorique, d'acide citrique ou de tout autre acide organique approprié,

c) addition de neuraminidase (sialidase) au lait ou au produit lacté,

d) maintien du mélange selon c) pendant une durée suffisante dans un domaine de pH de 4,0 à 8,0 pendant 10 min à 24h avec séparation de l'acide sialique des protéines à une température de 4 à 60°C,

e) le cas échéant chauffage à 85 à 100°C pendant 5 à 15 s en vue de l'inactivation de la neuraminidase après terminaison de l'hydrolyse selon d),

f) neutralisation ou tamponnement à l'aide de KOH, $K_2CO_3$ ou à l'aide de phosphates et/ou de citrates de potassium, sodium et calcium,

g) ajout d'additifs usuels utilisés pour l'adaptation, traitement usuel du mélange par des techniques de laiterie et

h) séchage par pulvérisation du mélange obtenu selon g).